# EUROPEAN PATENT SPECIFICATION

(11) **EP 2 857 231 B1**
(45) Date of publication and mention of the grant of the patent: **23.12.2015**
(21) Application number: 14179313.3
(22) Date of filing: 31.07.2014
(51) Int. Cl.: B60C 27/08

(54) **Anti-skid device for a vehicle wheel**
Antirutschvorrichtung für ein Fahrzeugrad
Dispositif antidérapant pour roue de véhicule

(30) Priority: 23.09.2013 IT PR20130072
(43) Date of publication of application: 08.04.2015
(73) Proprietor: Lampa S.p.A., 46019 Viadana (MN) (IT)
(72) Inventor: Marutti, Paolo, 46019 Viadana (MN) (IT)
(74) Representative: Monelli, Alberto

(56) References cited:
- EP-A2- 1 160 102
- FR-A- 767 887
- US-A- 1 025 159
- US-A- 1 679 416
- US-A- 4 615 368
- US-A1- 2012 132 329

## Description

The present invention relates to an anti-skid device for a vehicle wheel (a snow chain).

Snow chains are known comprising:
- a first ring which overlaps with the lateral inner side of a wheel of a vehicle;
- a second ring that overlaps with the lateral outer side of the wheel;
- a plurality of sections of chains that overlap with the tread and connect said first and said second ring.

In order to connect the sections of chains to the first ring, a fastening system is used. This fastening system comprises:
- an element that is wound around a first section of the first ring;
- a pin assembled on said element.

Such a pin allows the rotation of an end link of one of said sections of chain with respect to the fastening system. Such snow chains are for example shown in document US1424347.

Snow chains disclosed in US4615368, US2012/132329, US1679416 are known, wherein US 4615368 shows the features of the preamble of claim 1.

The technical task underpinning the present invention is herein to provide an anti-skid device for a vehicle wheel that allows component optimization, i.e. determining a reduction in costs and production times. It is a further object of this text to provide a strong and durable anti-skid device.

The technical task set and the objects specified are substantially attained by an anti-skid device, comprising the technical characteristics as set out in one or more of the accompanying claims.

Further characteristics and advantages of the present invention will become more apparent from the following indicative, and hence nonlimiting, description of a preferred, but not exclusive, embodiment of an anti-skid device as illustrated in the appended drawings, in which:

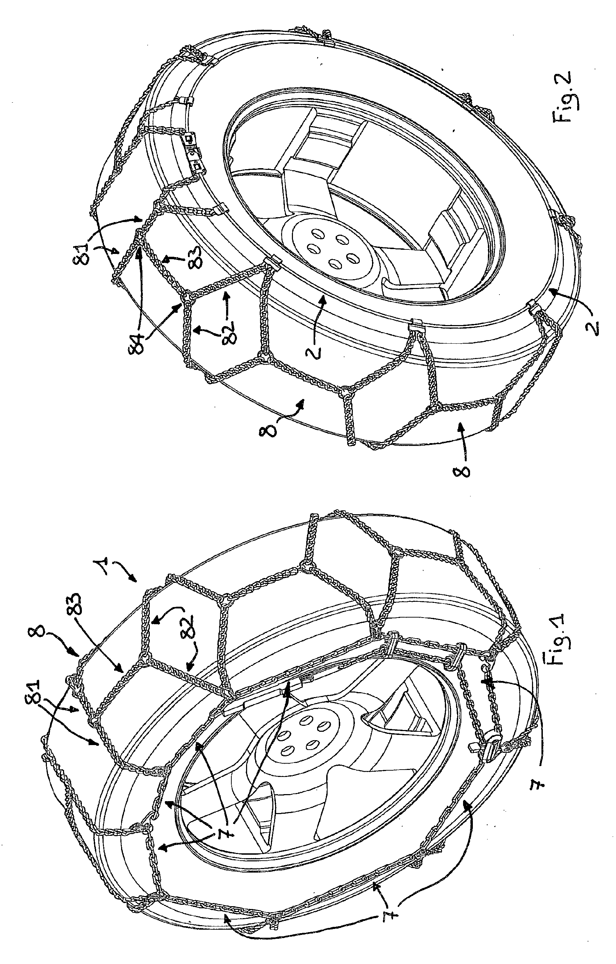

- figures 1 and 2 show perspective views from different observation points of an anti-skid device according to the present invention;
- figures 3 and 4 show details of a component of the device in figure 1;
- figures 5 and 6 show details of a further component of the device in figure 1.

In the appended figures reference number 1 designates an anti-skid device for a vehicle wheel. It is used to stop or however reduce the skidding of a vehicle in case of snow. Such a device 1 comprises a ring 2 designed to abut a lateral portion of a tyre (or however of a wheel). Particularly such a ring 2 is designed to abut a lateral inner portion of the tyre or however of the wheel (i.e. the part facing inwards to the vehicle). Appropriately such a ring 2 develops almost coaxially with the tyre. Such a ring 2 appropriately comprises a metal core potentially covered in some sections with a plastic coating. Such a ring can be opened to allow the positioning and/or removal of the device 1 with respect to the wheel. On this point, along the circumferential extension of the ring 2 there is a connector that allows two ends of said ring 2 to be mutually constrained/released.

The device 1 further comprises a first section 3 of anti-skid chain, at least one part of which is designed to overlap a tread of a tyre. A part of the first section 3 of chain also overlaps a shoulder of the tyre. Such first section 3 of the chain is designed to remain at least partially interposed between the ground and the tyre and to exert an anti-skid action.

The device 1 further comprises fastening means 4 for fastening said first section 3 of chain to said ring 2. Appropriately the fastening means 4 are connected to said core of the ring 2. At the contact zones between said core and said fastening means 4 the ring 2 is free from the plastic coating. Such plastic coating therefore defines positioning means of the fastening means 4 along the extension of the core. By causing a ring thickening, the plastic coating holds or contributes to hold the fastening means 4 in position.

Appropriately the fastening means 4 comprises a body 5 made as a single piece. The body 5 is a single block. It is completely made of the same material. The body 5 does not therefore define an assembled item made of various components or parts. It extends continuously. Such a body 5 advantageously comprises:
- a first connection portion 51 for connection to said ring 2;
- a second connection portion 52 in which an end link 30 of said first section 3 of chain is engaged. Advantageously the fastening means 4 coincides with the body 5 made as a single piece. Appropriately it connects the ring 2 and said end link 30.

The first portion 51 defines a first seat 513 that receives one part of said ring 2. The second portion 52 defines a second seat 514 that is distinguished from the first seat 513 and receives one part of said end link 30 of the first section 3 of chain. It is specified that said first section 3 of chain needs not necessarily to have all equal links. In fact, they may have different shapes and sizes. In particular the end link 30 may have a different shape and/or size if compared to the immediately subsequent one. The first and the second seat 513, 514 can extend along substantially parallel longitudinal axes. Appropriately the first seat 513 extends along its own longitudinal axis by less than 2 centimetres. Appropriately the second seat 514 extends along its own longitudinal axis by less than 1 centimetre, preferably less than 5 millimetres.

Appropriately the body 5 coincides with a thin folded plate 50. The thickness of such a plate 50 is less than 2 millimetres, preferably about 1 millimetre. The end link 30 of the first section 3 of chain clasps a part of said thin folded plate 50. The end link 30 can rotate about said thin folded plate 50. Appropriately the end link 30 is a closed ring.

Appropriately the body 5, in particular the thin plate 50, is made of metal material. Appropriately the body 5, in particular the thin plate 50, is rigid. The second connection portion 52 comprises an edge 520 that is folded so as to define a channel 521 for passage of the end link 30. Such a channel can be substantially shaped like an oval based prism.

An end of said edge 520 is welded to remaining parts of the body 5 over which said edge 520 is folded. This enables the chain to be made stronger. Furthermore also the assembly can take place quickly without the need for further accessory components such as, for example, assembly pins or the like.

The first connection portion 51 comprises/coincides with a hooked fastener 510. Such a fastener 510 is wound around a section of the ring 2, in particular a section of the core of the ring 2.

The end link 30 of the first section 3 of chain may be flat and not twisted. The first section 3 comprises a plurality of twisted links. Advantageously the twisted links are consecutive to the end link 30. Appropriately the use of twisted links is particularly advantageous since it makes it possible to produce chains that can be used also in sports cars in which there is a reduced space between the tyre and the mechanical organs of the vehicle (suspensions, etc.). Advantageously by the use of twisted links snow chains can be assembled even if the minimum space between the tyre and the mechanical organs of the vehicle is greater than 7 or 8 millimetres. Appropriately the portion of the chain that overlaps with a lateral side of the tyre remains between the lateral side of the tyre and a plane parallel to it 7 or 8 millimetres away.

The first connection portion 51 comprises a folded flap 511 for defining said first seat 513 which receives one part of said ring 2. Appropriately one end 512 of said flap 511 is near, but not welded (and more generally not directly connected) to one part of said body 5 over which the flap 511 is folded. The flap 511 therefore remains alongside a part of said body 5 over which the flap 511 is folded. In particular the flap 511 allows the ring 2 to be fastened. After the positioning around a part of the ring 2 such a flap 511 is normally clamped around said part of the ring 2. The flap 511 can however normally rotate with respect to the ring 2, in particular with respect to the core of the ring 2.

Appropriately the first and the second portion 51, 52 of the body 5 are located at two opposite sides of said body 5. Appropriately said body 5 comprises a flat metal zone interposed between the first and the second portion 51, 52. Appropriately, but not necessarily, such flat zone extends parallel to the plane identified by said ring 2.

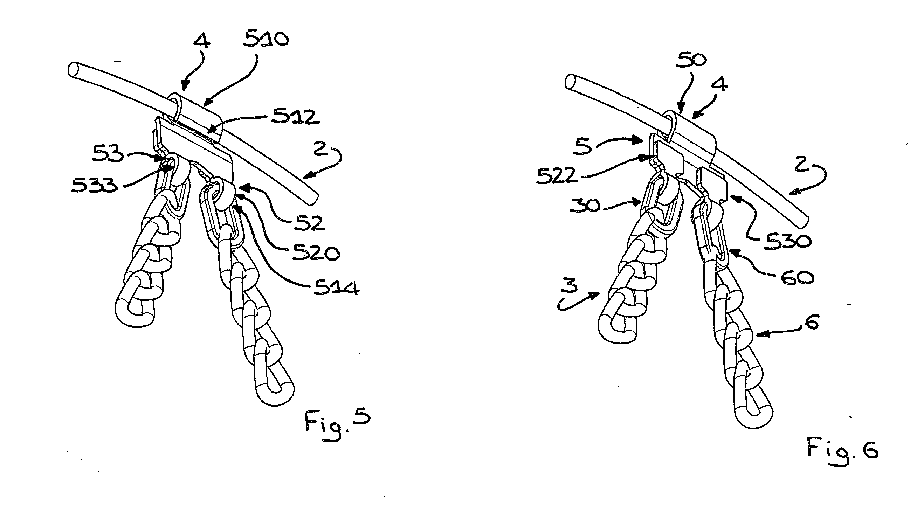

Appropriately the device 1 comprises a second section 6 of anti-skid chain designed to at least partially overlap a tread of a tyre. The body 5 made as a single piece (in particular the thin plate 50) comprises a third connection portion 53 in which an end link 60 of the second section 6 of chain is engaged. One or more of the characteristics described with reference to the connection of the first portion 51 of the end link 30 can be repeated for the connection of the third portion 53 of the end link 60. In particular the third connection portion 53 comprises an additional folded edge 530 so as to define a channel for passage of said end link 60 of the second section 6 of the chain; one end of said additional edge 530 being welded to remaining parts of the body 5 over which said additional edge 530 is folded. The folded edge 530 therefore defines a third seat 533 designed to be crossed by the end link 60 of the second section of chain. The second and the third seat 514, 533 are alongside one another. The second and the third seat 514, 533 could be coaxial. Such a solution is exemplified in figures 5 and 6, where two distinct sections of chain are connected with the same body 5.

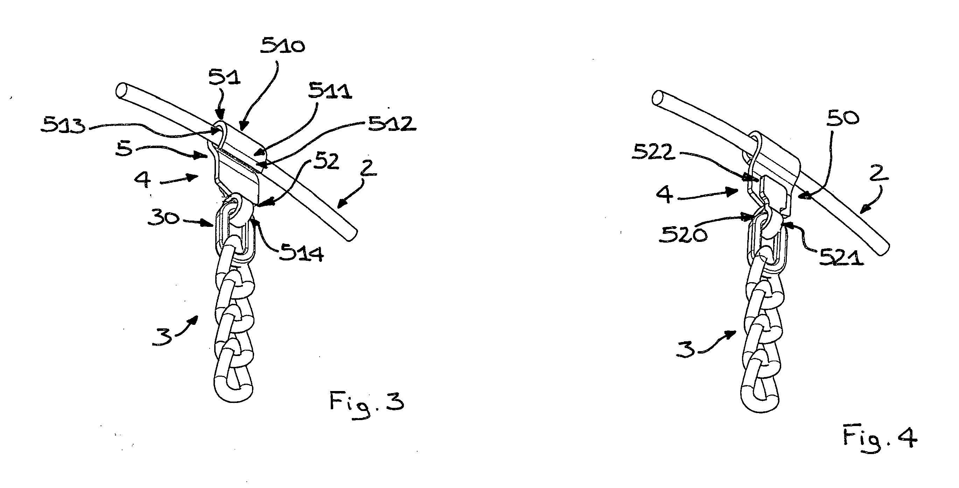

In fact, some fastening means 4 may be fastened to a single chain (see figures 3 and 4), whereas others may be fastened to two chains (see figures 5 and 6).

Appropriately the description with reference to the fastening means 4 for fastening the first section 3 to the ring 2 may also be repeated for the fastening means for fastening other sections of chain to the ring 2. Appropriately the device 1 comprises an annular structure 7 designed to abut a lateral portion of a wheel facing outwards from the vehicle. The first section 3 extends between the ring 2 and said annular structure 7. Appropriately the device 1 comprises a plurality of modular elements 8 of anti-skid chains which in turn comprise:
- two transversal portions 81,82 that each connect the ring 2 and the annular structure 7;
- a circumferential portion 83 that connects said two transversal portions 81, 82 (and designed to extend circumferentially to the tyre).

At the intersection points of the two transversal portions 81, 82 with the circumferential portion 83 there are circular connection rings 84. Such circular rings 84 appropriately have undulations in order to better interface with the twisted links that are connected to them. The circular shape of the circular ring 84 is important since it allows this junction zone to be reinforced with respect to other shapes thereof. The links of said chains of modular elements 8 are appropriately partially twisted.

Appropriately the first and the second section 3, 6 previously described are part of distinct and consecutive modular elements 8.

The present invention further relates to a method for the production of an anti-skid device for a vehicle wheel having one or more of the characteristics previously described. The method comprises the steps of:
- connecting said body 5 to said first section of chain 3;
- galvanizing said first section 3 of chain and said body 5;
- after said galvanization, connecting, through said body 5, said first section 3 of chain to said ring 2, folding the first portion 51 of the body 5 around one part of said ring 2.

In particular the step of galvanizing the first section 3 of chain and said body 5 is integrated into a wider galvanizing step of a plurality of sections of anti-skid chain. The step of connecting said body 5 to said first section of chain 3 further envisages a step of welding an end of said edge 520 to remaining parts of the body 5 over which said edge 520 is folded. The method may also envisage a step of welding an end of said additional edge 530 to remaining parts of the body 5 over which said additional edge 530 is folded. The step of welding said end of the edge 520 (and/or the additional edge 530) takes place before said galvanizing step. The fact that the flap 511 is not welded to the body 5 after the folding makes it possible to galvanize the chain before the final assembly with the ring 2 (making the production process simpler and quicker).

The present invention has numerous advantages.

First of all it allows a particularly strong chain to be provided. Furthermore thanks to component optimization the production costs and manufacturing times can also be reduced.

The invention as conceived is susceptible to numerous modifications and variants, all falling within the scope of the inventive concept characterised thereby. Furthermore all the details can be replaced by other technically equivalent elements. In practice, all the materials used, as well as the dimensions, can be any according to requirements.

## Claims

1. An anti-skid device for a vehicle wheel, comprising:
i) -a ring (2) designed to abut a lateral portion of a wheel of a vehicle;
ii) -a first section (3) of an anti-skid chain, a part of which is designed to overlap a tread of a tyre at least partially;
iii) -fastening means (4) for fastening said first section (3) of chain to said ring (2);
said fastening means (4) comprising a body (5) made as a single piece comprising:
- a first connection portion (51) for connection to said ring (2);
- a second connection portion (52) in which an end link (30) of said first section (3) of chain is engaged;
the first and second portions (51, 52) defining, respectively, a first seat (513) that receives one part of said ring (2) and a second seat (514) that is distinguished from the first seat (513) and receives one part of said end link (30) of the first section (3) of chain;
said second connection portion (52) comprises an edge (520) that is folded so as to define a channel (521) for passage of said end link (30) of the first section (3) of the chain;
the device being **characterised in that** one end of said edge (520) being welded to remaining parts of the body (5) over which said edge (520) is folded.

2. The device according to claim 1, **characterized in that** said body (5) coincides with a thin folded plate (50), said link (30) of the first section (3) of chain clasping and being able to rotate about one part of said thin folded plate (50).

3. The device according to any one of the preceding claims, **characterized in that** said first connection portion (51) comprises/coincides with a hooked fastener (510).

4. The device according to any one of the preceding claims, **characterized in that** the end link (30) of the first section (3) of chain is flat and not twisted.

5. The device according to any one of the preceding claims, **characterized in that** the first connection portion (51) comprises a folded flap (511) for defining said first seat (513) which receives one part of said ring (2); one end (512) of said flap (511) being near, but not welded to one part of said body (5) over which the flap (511) is folded.

6. The device according to any one of the preceding claims, **characterized in that** it comprises a second section (6) of an anti-skid chain designed to overlap a tread of a tyre at least partially, said body (5) made as a single piece comprising a third connection portion (53) wherein an end link (60) of the second section (6) of chain is engaged.

7. The device according to claim 6, **characterized in that** the third connection portion (53) comprises an additional edge (530) that is folded so as to define a channel for passage of said end link (60) of the second section (6) of the chain; one end of said additional edge (530) being welded to remaining parts of the body (5) over which said additional edge (530) is folded.

8. The device according to any one of the preceding claims, **characterized in that** it comprises an annular structure (7) designed to abut a lateral portion of a wheel facing outwards from the vehicle, said first section (3) comprising a plurality of twisted links and extending between the ring (2) and said annular structure (7).

9. Method for the production of a device according to any of the preceding claims **characterized in that** it comprises the steps of:
- connecting said body (5) to said first section (3) of chain;
- galvanizing said first section (3) of chain and said body (5);
- after said galvanization, connecting said first section (3) of chain to said ring (2) folding the first portion (51) of the body around one part of the ring (2);
the step of connecting said body (5) to said first section of chain (3) further envisaging a step of welding an end of said edge (520) to remaining parts of the body (5) over which said edge (520) is folded; the step of welding said end of the edge (520) taking place before said galvanizing step.

## Patentansprüche

1. Antirutschvorrichtung für ein Fahrzeugrad, umfassend:
i) einen Ring (2), der ausgestaltet ist, um an einen seitlichen Abschnitt eines Rads eines Fahrzeugs anzuschlagen;
ii) eine erste Sektion (3) einer Antirutschkette, von der ein Teil ausgelegt ist, um eine Lauffläche eines Reifens zumindest teilweise zu überlappen;
iii) Befestigungsmittel (4) zum Befestigen der ersten Kettensektion (3) am Ring (2),
wobei diese Befestigungsmittel (4) einen Körper (5) umfassen, der in einem einzigen Stück ausgebildet ist,
umfassend:
- einen ersten Verbindungsabschnitt (51) zur Verbindung mit dem Ring (2);
- einen zweiten Verbindungsabschnitt (52), in den ein Endglied (30) der ersten Kettensektion (3) eingreift, wobei der erste und der zweite Abschnitt (51, 52) jeweils einen ersten Sitz (513), der einen Teil des Rings (2) aufnimmt, und einen zweiten Sitz (514), der vom ersten Sitz (513) unterschieden ist und einen Teil des Endglieds (30) der ersten Kettensektion (3) aufnimmt, definieren,
wobei der zweite Verbindungsabschnitt (52) eine Kante (520) umfasst, die so gefaltet ist, dass sie einen Kanal (521) für den Durchgang des Endglieds (30) der ersten Kettensektion (3) definiert,
wobei die Vorrichtung **dadurch gekennzeichnet ist, dass** ein Ende der Kante (520) an den übrigen Teilen des Körpers (5), über die die Kante (520) gefaltet ist, angeschweißt ist.

2. Vorrichtung nach Anspruch 1, **dadurch gekennzeichnet, dass** der Körper (5) mit einer dünnen gefalteten Platte (50) übereinstimmt, wobei das Glied (30) der ersten Kettensektion (3) einen Teil der dünnen gefalteten Platte (50) umspannt und in der Lage ist, sich um diesen zu drehen.

3. Vorrichtung nach einem der vorhergehenden Ansprüche, **dadurch gekennzeichnet, dass** der erste Verbindungsabschnitt (51) einen Hakenverschluss (510) umfasst/mit diesem übereinstimmt.

4. Vorrichtung nach einem der vorhergehenden Abschnitte, **dadurch gekennzeichnet, dass** das Endglied (30) der ersten Kettensektion (3) flach und nicht gewunden ist.

5. Vorrichtung nach einem der vorhergehenden Ansprüche, **dadurch gekennzeichnet, dass** der erste Verbindungsabschnitt (51) eine gefaltete Klappe (511) umfasst, um den ersten Sitz (513) zu definieren, die einen Teil des Rings (2) aufnimmt, wobei ein Ende (512) dieser Klappe (511) sich nahe an einem Teil des Körpers (5) befindet, über den die Klappe (511) gefaltet ist, jedoch nicht mit diesem verschweißt ist.

6. Vorrichtung nach einem der vorhergehenden Ansprüche, **dadurch gekennzeichnet, dass** sie eine zweite Sektion (6) einer Antirutschkette umfasst, die ausgestaltet ist, um eine Lauffläche eines Reifens zumindest teilweise zu überlappen, wobei der Körper (5) in einem einzigen Stück ausgebildet ist, umfassend einen dritten Verbindungsabschnitt (53), in den ein Endglied (60) der zweiten Kettensektion (6) eingreift.

7. Vorrichtung nach Anspruch 6, **dadurch gekennzeichnet, dass** der dritte Verbindungsabschnitt (53) eine zusätzliche Kante (530) umfasst, die so gefaltet ist, dass sie einen Kanal für den Durchgang des Endglieds (60) der zweiten Kettensektion (6) definiert, wobei ein Ende der zusätzlichen Kante (530) an den übrigen Teilen des Körpers (5), über die die zusätzliche Kante (530) gefaltet ist, angeschweißt ist.

8. Vorrichtung nach einem der vorhergehenden Ansprüche, **dadurch gekennzeichnet, dass** sie eine Ringstruktur (7) umfasst, die ausgestaltet ist, um an einem seitlichen Abschnitt eines Rads anzuschlagen, der zur Außenseite des Fahrzeugs hin gerichtet ist, wobei der erste Abschnitt (3) eine Vielzahl an gewundenen Glieder umfasst und sich zwischen dem Ring (2) und der Ringstruktur (7) erstreckt.

9. Verfahren zur Herstellung einer Vorrichtung nach einem der vorhergehenden Abschnitte, **dadurch gekennzeichnet, dass** es folgende Schritte umfasst:
- Verbinden des Körpers (5) mit der ersten Kettensektion (3);
- Galvanisieren der ersten Kettensektion (3) und des Körpers (5);
- nach der Galvanisierung Verbinden der ersten Kettensektion (3) mit dem Ring (2), wobei der erste Abschnitt (51) des Körpers rund um einen Teil des Rings (2) gefaltet wird,
wobei der Schritt zum Verbinden des Körpers (5) mit der ersten Kettensektion (3) zudem einen Schritt zum Verschweißen eines Endes der Kante (520) an den übrigen Teilen des Körpers (5), über die die Kante (520) gefaltet wird, umfasst, und der Schritt zum Verschweißen des Endes der Kante (520) vor dem Schritt zum Galvanisieren stattfindet.

## Revendications

1. Dispositif antidérapant pour roue de véhicule, comprenant :
i) - un anneau (2) conçu pour se mettre en butée contre une partie latérale d'une roue de véhicule ;
ii) - une première section (3) d'une chaîne antidérapante, dont une partie est conçue pour chevaucher, au moins partiellement, une chape d'un pneu ;
iii) - des moyens de fixation (4) destinés à attacher ladite première section (3) de chaîne au dit anneau (2) ;
lesdits moyens de fixation (4) comprenant un corps (5) fabriqué en une seule pièce comprenant :
- une première partie de raccordement (51) pour le raccordement au dit anneau (2) ;
- une seconde partie de raccordement (52) dans laquelle une maille d'extrémité (30) de ladite première section (3) de chaîne est engagée ;
les première et seconde parties (51, 52) définissant, respectivement, un premier siège (513) qui reçoit une partie dudit anneau (2) et un second siège (514) se distinguant du premier siège (513) et qui reçoit une partie de la dite maille d'extrémité (30) de la première section (3) de chaîne ;
ladite seconde partie de raccordement (52) comprend un bord (520) étant replié de manière à définir un canal (521) destiné au passage de la dite maille d'extrémité (30) de la première section (3) de la chaîne ;
le dispositif étant **caractérisé en ce qu'**une extrémité dudit bord (520) est soudée aux parties restantes du corps (5) sur lequel ledit bord (520) est replié.

2. Dispositif selon la revendication 1, **caractérisé en ce que** ledit corps (5) coïncide avec une plaque fine repliée (50), la dite maille d'extrémité (30) de la première section (3) de chaîne serrant et étant apte à tourner autour d'une partie de ladite plaque fine repliée (50).

3. Dispositif selon l'une quelconque des revendications précédentes, **caractérisé en ce que** ladite première partie de raccordement (51) comprend/coïncide avec une fixation à crochet (510).

4. Dispositif selon l'une quelconque des revendications précédentes, **caractérisé en ce que** la maille d'extrémité (30) de la première section (3) de chaîne est plate et non torsadée.

5. Dispositif selon l'une quelconque des revendications précédentes, **caractérisé en ce que** la première partie de raccordement (51) comprend un rabat replié (511) destiné à définir ledit premier siège (513) qui reçoit une partie dudit anneau (2) ; une extrémité (512) dudit rabat (511) étant proche, mais non soudée à une partie dudit corps (5) sur lequel le rabat (511) est replié.

6. Dispositif selon l'une quelconque des revendications précédentes, **caractérisé en ce qu'**il comprend une seconde section (6) d'une chaîne antidérapante conçue pour chevaucher, au moins partiellement, une chape de pneu, ledit corps (5) fabriqué en une seule pièce comprenant une troisième partie de raccordement (53) dans laquelle une maille d'extrémité (60) de la seconde section (6) de chaîne est engagée.

7. Dispositif selon la revendication 6, **caractérisé en ce que** la troisième partie de raccordement (53) comprend un bord supplémentaire (530) étant replié de manière à définir un canal destiné au passage de la dite maille d'extrémité (60) de la seconde section (6) de la chaîne ; une extrémité dudit bord supplémentaire (530) étant soudée aux parties restantes du corps (5) sur lequel ledit bord supplémentaire (530) est replié.

8. Dispositif selon l'une quelconque des revendications précédentes, **caractérisé en ce qu'**il comprend une structure annulaire (7) conçue pour se mettre en butée contre une partie latérale d'une roue tournée vers l'extérieure du véhicule, ladite première section (3) comprenant une pluralité de liaisons torsadées et se développant entre l'anneau (2) et ladite structure annulaire (7).

9. Procédé de fabrication d'un dispositif selon l'une quelconque des revendications précédentes, **caractérisé en ce qu'**il comprend les étapes de :
- raccorder ledit corps (5) à ladite première section (3) de chaîne ;
- galvaniser ladite première section (3) de chaîne et ledit corps (5) ;
- après ladite galvanisation, raccorder ladite première section (3) de chaîne au dit anneau (2) en repliant la première partie (51) du corps autour d'une partie de l'anneau (2) ;
l'étape consistant à raccorder ledit corps (5) à ladite première section (3) de chaîne
prévoyant de plus une étape consistant à souder une extrémité dudit bord (520) aux parties restantes du corps (5) sur lequel ledit bord (520) est replié ; l'étape consistant à souder ladite extrémité du bord (520) ayant lieu avant ladite étape de galvanisation.
